# EUROPÄISCHE PATENTSCHRIFT

(11) **EP 0 941 794 B1**
(45) Veröffentlichungstag und Bekanntmachung des Hinweises auf die Patenterteilung: **03.11.2004**
(21) Anmeldenummer: 99810126.5
(22) Anmeldetag: 12.02.1999
(51) Int. Cl.: B23B 51/00

(54) **Bohrwerkzeug**
Drilling tool
Outil de forage

(30) Priorität: 10.03.1998 DE 19810192
(43) Veröffentlichungstag der Anmeldung: 15.09.1999
(73) Patentinhaber: HILTI Aktiengesellschaft, 9494 Schaan (LI)
(72) Erfinder: Kleine, Werner, 28832 Achim (DE); Bongers-Abrosius, Hans-Werner, 81477 München (DE)
(74) Vertreter: Wildi, Roland

(56) Entgegenhaltungen:
- US-A- 3 163 246
- US-A- 3 767 315
- US-A- 4 189 013
- US-A- 4 190 128
- US-A- 4 243 113

## Beschreibung

Die Erfindung betrifft ein Bohrwerkzeug gemäss dem Oberbegriff des Patentanspruchs 1, (siehe z.Bsp. US 3 767 315).

Neben den bekannten Bohrwerkzeugen zur Erstellung von Bohrlöchem in Gestein, Beton, Mauerwerk und dergleichen, bei denen das abgetragene Bohrklein mittels wenigstens einer am Schaft des mit Schneiden versehenen Bohrwerkzeugs wendelförmig verlaufenden Abfuhmut aus dem Bohrloch abtransportiert wird, sind in der Vergangenheit auch sogenannte Saugbohrer vorgeschlagen worden. Sie bestehen aus einem mit einer axialen Bohrung ausgestatteten Bohrwerkzeug, das über einen Adapter und ein Kupplungsteil an eine Unterdruck erzeugende Vorrichtung, insbesondere einen Staubsauger oder dergleichen, angeschlossen ist. Saugbohrer sollen über eine Absaugung des im Betrieb entstehenden Bohrkleins eine höhere Bohrleistung erbringen und zu einer besseren Reinigung des Bohrloches führen. Ein derartiger Saugbohrer ist beispielsweise in der DE-A-27 56 140 beschrieben. Dieser bekannte Saugbohrer weist einen mit einer axialen Saugbohrung versehenen Schaft auf, dessen eines Ende in einen Adapter eingesetzt ist, der von einem drehfesten Kupplungsteil umgeben ist. Am gegenüberliegenden Ende des Schaftes ist ein Kopfteil mit eingesetzten Hartmetall-Schneidplättchen lösbar eingeschraubt. Die Saugbohrung steht mit einer Bohrung im Kopfteil in Verbindung, die zu beiden Seiten des Schneidplättchens münden. Über den Adapter und das Kupplungsteil ist die Saugbohrung mit einem Staubsauger verbunden. Im Betrieb wird das an den Schneiden entstehende Bohrklein durch den Bohrkopf und die Saugbohrung in den Staubsauger transportiert.

Dieser bekannte Saugbohrer weist ein auswechselbares Kopfteil auf, das in den Schaft eingeschraubt ist. Bei übermässiger Abnützung des in das Kopfteil eingesetzten Hartmetallschneidplättchens oder bei Verstopfung der Bohrungen soll das Kopfteil austauschbar sein. Durch die insbesondere bei Hammerbohrgeräten im Betrieb auftretenden grossen Einzelschlagenergien der Axialschläge wird das Schraubgewinde im Schaft und am Kopfteil sehr stark belastet. Dadurch kann es vorkommen, dass das Gewinde ausgeschlagen wird und das Kopfteil nicht mehr sicher befestigbar ist. Andererseits kann es vorkommen, dass durch die Rotation des Bohrwerkzeugs im Betrieb die Schraubverbindung zwischen dem Kopfteil und dem Schaft so fest angezogen wird, dass sie bei Bedarf nur mehr unter grösster Kraftaufwendung oder gar nicht mehr lösbar ist. Auch erweist sich die Fertigung dieses bekannten Saugbohrers als relativ aufwendig. Dabei stellt vor allem die Herstellung der axialen Bohrung in dem aus einem relativ langen Stahlstab bestehenden Schaft hohe Anforderungen an die Fertigungstechnik.

Um diesen Nachteilen der bekannten Saugbohrer abzuhelfen und die Fertigung von Saugbohrem zu vereinfachen, ist in der DE-U-79 08 923 vorgeschlagen, den Schaft des Bohrwerkzeugs aus einer Stahlhülse zu fertigen. Ein Ende des hülsenförmigen Schaftes ist mit einem Adapter verbunden, der von einem drehfesten Kupplungsteil umgeben ist, an das beispielsweise ein Staubsauger anschliessbar ist. In axialer Verlängerung des Schaftes ist der Adapter mit einem Einsteckende für den Anschluss des Bohrwerkzeugs an ein Bohrgerät ausgestattet. Die Stahlhülse ist an ihrem gegenüberliegenden Vorderende mit axialen Schlitzen versehen, die kreuzartig angeordnet sind. In diese Axialschlitze sind die Schneiden eines einstückig gesinterten Hartmetallschneidenkreuzes eingeschoben und befestigt. Die Gestalt der Schneiden und der Innendurchmesser des hülsenförmigen Schaftes sind dabei so ausgewählt, dass zwischen den Schneiden und der Innenwandung des Schaftes Öffnungen verbleiben, die mit dem axialen Kanal im Schaft in Verbindung stehen.

Das aus der DE-U-79 08 923 bekannte Bohrwerkzeug weist im Kopfbereich eine relativ geringe Stabilität auf. Das einstückig aus Hartmetall gesinterte Schneidenkreuz ist nur in den axialen Schlitzen von der Stahlhülse unterstützt. Die beim drehend schlagenden Abbau des Untergrunds auftretenden Scherkräfte müssen nahezu vollumfänglich von dem Schneidenkreuz aufgenommen werden. Dabei kann sich das Schneidenkreuz aus den Schlitzführungen lösen oder es kann gar zu einem Versagen des Hartmetalls kommen. Die Gestalt der kreuzförmig angeordneten Schneiden ist derart gewählt, dass zwischen den Schneiden und der Innenwandung des Schaftes Öffnungsbereiche verbleiben, die sich in axialer Fortsetzung des axialen Kanals erstrecken. Die Schneiden sind daher leistenartig ausgebildet und weisen eine zum Kreuzungsbereich zunehmende Höhe auf. Auf diese Weise bilden die Einzelschneiden im Kreuzungsbereich eine Schneidspitze, die ohne jegliche Unterstützung den axialen Kanal überbrückt. Im Betrieb ist die vorstehende Schneidspitze der grössten Belastung durch die axialen Schläge unterworfen. Durch die gewählte Ausbildung des Schneidenkreuzes kann es insbesondere in Verbindung mit Hammerbohrgeräten mit relativ grossen Einzelschlagenergien der axialen Schläge vorkommen, dass das einstückig aus Hartmetall gesinterte Schneidenkreuz bricht. Die von den Schneiden und der Innenwandung der Hülse berandeten Öffnungen sind axial orientiert. Im Betrieb kann es vorkommen, dass das Kopfende des Saugbohrers vollständig in das abgebaute Bohrklein eintaucht. Dann reicht die Saugwirkung vielfach nicht mehr aus, um das Bohrklein schnell genug abzusaugen und die Öffnungen können verstopfen.

Aus der US 3 767 315 ist ein Bohrwerkzeug mit einem rohrförmigen Schaft, der einen in Absaugöffnungen mündenden Durchgangskanal aufweist, bekannt. An dem vorderen Ende des Schafts ist ein Schneiden aufweisender Bohrkopf aus Hartmetall angefügt, wobei der Bohrkopf eine zylindrische Bohrung aufweist, die formschlüssig auf die Zylindermantelfläche des Rohrförmigen Schaftes aufgesetzt und dort verlötet oder verschweisst ist. Das vordere Schaftende ist in einem Winkel A von 30° konisch zum Durchgangskanal hin erweitert und bildet zum Teil die Absaugöffnungen aus.

Aufgabe der vorliegenden Erfindung ist es, diesen Nachteilen der Bohrwerkzeuge des Stands der Technik abzuhelfen. Es soll ein Bohrwerkzeug der gattungsgemässen Art geschaffen werden, das einen hülsenförmigen Schaft und einen vollständig aus Schneidwerkstoff, vorzugsweise aus einem Hartmetall, gesinterten Bohrkopf aufweist. Das Bohrwerkzeug soll derart konstruiert sein, dass ein Verstopfen der mit dem Durchgangskanal im Schaft kommunizierenden Absaugöffnungen durch im Betrieb abgebautes Bohrklein verhindert wird. Dabei soll die Montage des Bohrkopfes einfach und zuverlässig erfolgen können.

Die Lösung dieser Aufgaben besteht in einem Bohrwerkzeug mit den im kennzeichnenden Abschnitt des Patentanspruchs 1 angeführten Merkmalen. Das erfindungsgemässe Bohrwerkzeug zur Erstellung von Bohrlöchem in Gestein, Beton, Mauerwerk und dergleichen weist einen rohrförmigen Schaft auf, der einen in Absaugöffnungen mündenden, axial verlaufenden Durchgangskanal besitzt. An seinem einen Längsende ist der rohrförmige Schaft mit einem Einsteckende für den Anschluß an ein Bohrgerät ausgestattet. Am gegenüberliegenden freien Vorderende trägt der Schaft einen Schneiden aufweisenden Bohrkopf, der zur Gänze aus Schneidwerkstoff, vorzugsweise aus einem Hartmetall, besteht. Der Bohrkopf ist mit dem freien Vorderende des rohr förmigen Schafts im wesentlichen stumpf gefügt und vorzugsweise durch Schweissen oder Löten verbunden. Wenigstens eine Absaugöffnung ist von der Mündung eines Kopfkanals gebildet, der zumindest teilweise vom Material des Bohrkopfs berandet ist und dessen Mündungsfläche wenigstens zum Teil im Umfangsbereich des Schafts und/oder des Bohrkopfs angeordnet ist.

Indem das Bohrwerkzeug wenigstens einen Kopfkanal aufweist, dessen Mündungsfläche zu einem Grossteil im Umfangsbereich des Schafts und/oder des Bohrkopfs angeordnet ist, kann die Absaugöffnung im Betrieb nicht so leicht verstopfen. Die von der Mündung des Kopfkanals gebildete Absaugöffnung befindet sich ausserhalb des Angriffes der Schneiden am Untergrund und taucht nicht unmittelbar in das abgebaute Bohrklein ein. Dadurch wird verhindert, dass die Absaugöffnung, beispielsweise bei noch ungenügender Saugleistung zu Beginn des Bohrvorgangs, vom Bohrklein verstopft wird. Die wenigstens teilweise vom Material des Bohrkopfs berandete Absaugöffnung ist dem Bohrlochgrund jedoch nah genug, damit durch den im Betrieb erzeugten Unterdruck das beim Bohren entstehende Bohrklein zuverlässig entfemt werden kann. Die seitliche Orientierung der Mündungsöffnung zum im Betrieb gebildeten Ringraum verhindert, dass sich Material, dass noch nicht ausreichend zerkleinert ist, vor die Absaugöffnung legt und das Absaugen behindert. Auf diese Weise gelangt nur Bohrklein zur Absaugöffnung, dass von den Schneiden im Ringraum ausreichend zermahlen worden ist. Indem der Bohrkopf im wesentlichen stumpf mit dem rohrförmigen Schaft gefügt wird, ist der Montagevorgang relativ schnell durchführbar. Die Fixierung des Bohrkopfs am Schaftvorderende erfolgt vorzugsweise durch Schweissen oder Löten. Beide Fügetechniken sind hinlänglich erprobt und gewährleisten den erforderlichen Halt des Bohrkopfs auf dem Schaft.

Für eine weitgehend störungsfreie Funktion des Bohrwerkzeugs erweist es sich von Vorteil, wenn mehr als zwei Drittel der Mündungsfläche des Kopfkanals im Umfangsbereich des Schafts und/oder des Bohrkopfs angeordnet sind.

Um ein Verstopfen der Absaugöffnung noch besser zu verhindem ist mit Vorteil der Kopfkanal in Richtung des Mantels des Schafts bzw. zur axialen Seitenfläche des Bohrkopfs orientiert und schliesst er mit der Längsachse des rohrförmigen Schafts einen Winkel ein, der kleiner ist als 90° und vorzugsweise zwischen 10° und 70° beträgt. Der Kopfkanal ist vorzugsweise durch eine Materialaussparung im Mantel des Schafts und/oder im Bohrkopf gebildet. Dadurch wird er mit seiner als Absaugöffnung wirkenden Mündung automatisch beim Fügen des Kopfs und des Schafts gebildet und kann eine weitere Nacharbeitung entfallen. Die Aussparung kann in der Stimseite des Schaftmantels vorgesehen sein oder es kann durch eine spezielle Formgebung des Bohrkopfs nach dem Fügen des Bohrkopfs und des rohrförmigen Schafts ein Kopfkanal freibleiben. Der Kopfkanal kann auch durch eine Kombination der beiden Massnahmen gebildet sein. Nachdem der Bohrkopf üblicherweise in einem pulvermetallurgischem Formgebungs und Sinterprozess hergestellt wird, bestehen vielfältige Freiheiten hinsichtlich seiner Formgebung. Es ist auch möglich, die Materialaussparungen am Bohrkopf nach dem erfolgten Sintervorgang, beispielsweise durch eine materialabtragende Bearbeitung der Seitenfläche(n) oder durch das Erstellen einer oder mehrerer Bohrungen im Bohrkopf, zu erzeugen.

Vorzugsweise ist die Querschnittsfläche der Mündung des Kopfkanals kleiner ausgebildet als die Querschnittsfläche des Durchgangskanals und beträgt sie zwischen etwa 30% und 70% der Querschnittsfläche des Durchgangskanals. Im Falle mehrerer Kopfkanäle mit Mündungsöffnungen ist vorzugsweise die Summe der Querschnittsflächen aller Mündungsöffnungen kleiner als die Querschnittsfläche des Durchgangskanals. Indem der Durchgangskanal die grössere Querschnittsfläche aufweist, wird verhindert, dass Bohrklein mit einem grösseren Durchmesser als der Durchgangskanal angesaugt wird. Damit wird einem Verstopfen des Durchgangskanals zuverlässig entgegengewirkt. Schlimmstenfalls kann eine der Mündungsöffnungen kurzfristig im mündungsnahem Bereich verlegt werden. Eine derartige Verstopfung lässt sich aber relativ leicht wieder beheben, beispielsweise indem mit einem Nagel oder mit einem Drahtstück das verstopfende Material in den breiteren Durchgangskanal durchgestossen wird. Durch die gewählten Querschnittsverhältnisse der einen oder mehreren Mündungsöffnungen zum Durchgangskanals wird im Bohrloch auch ein ausreichend hoher Unterdruck erzeugt, der dafür sorgt, dass das durch die Mündungsöffnung angesaugte Bohrklein immer sofort durch den Schaft abgesaugt wird. Dadurch wird verhindert, dass der Durchgangskanal durch eine übermässig grosse angesaugte Menge an Bohrklein, die nicht schnell genug abtransportiert werden kann, verstopft.

Der Kopfkanal und/oder der Durchgangskanal müssen nicht notwendigerweise einen kreisförmigen Querschnitt aufweisen. Beispielsweise kann der Querschnitt bei Bedarf auch elliptisch, oval, polygonartig etc. ausgebildet sein. Der Bedard nach einem von der Kreisform abweichenden Querschnitt kann beispielsweise in der Notwendigkeit einer lokal grösseren Fügefläche am Schaft für den stumpfen Fügeprozess des Bohrkopfs begründet sein.

Altemativ zu einem von der Kreisform abweichenden Querschnitt des Durchgangskanals oder in Kombination damit kann auch der Schaft eine von der Kreisform abweichende Umfangskontur aufweisen. Durch die weitgehend beliebige Gestaltung der Umfangskontur des Schafts kann optimierten Formgebungen des Bohrkopfs Rechnung getragen werden, und es wird gleichzeitig für den Fügeprozess eine möglichst grosse Fügefläche zur Verfügung gestellt.

In einer interessanten Variante des erfindungsgemässen Bohrwerkzeugs weist der Durchgangskanal wenigstens im Vorderabschnitt des Schafts einen polygonartigen Querschnitt auf und besitzt der Bohrkopf an seiner den Schneiden gegenüberliegenden Seite eine axiale Verlängerung, deren Umfangskontur dem Querschnitt des Durchgangskanals wenigstens bereichsweise entspricht. Beispielsweise kann der Querschnitt des Durchgangskanals die Form eines regelmässigen Sechsecks aufweisen und die axiale Verlängerung als korrespondierender Sechskant ausgebildet sein. Bei montiertem Bohrkopf befindet sich die sechskantige Verlängerung innerhalb des sechskantigen Durchgangskanals und ist drehfest gehalten. Die axiale Verlängerung ist mit dem Schaft weder verlötet noch verschweisst noch reibschlüssig verbunden. Indem die Umfangskontur der axialen Verlängerung und der Querschnitt des Durchgangskanals einander weitgehend entsprechen, übemimmt die daraus resultierende drehfeste Kopplung zwischen dem Bohrkopf und dem Schaft einen Grossteil der im Betrieb auf den Bohrkopf einwirkenden Scherkräfte und leitet diese über den Schaft ab. Dadurch wird die Fügestelle, beispielsweise die Verschweissung oder Verlötung, zwischen dem Bohrkopf und dem Schaft entlastet, und ein Abscheren des Bohrkopfs kann noch besser verhindert werden.

Indem die Anzahl der Absaugöffnungen der Anzahl der Schneiden am Bohrkopf entspricht und jede Absaugöffnung zu der in Drehrichtung unmittelbar vorauseilenden Schneide einen Winkelabstand aufweisen, der kleiner ist als 90°, wird das im Betrieb entstehende Bohrklein weitgehend schon unmittelbar hinter den Schneiden abgesaugt. Falls es im Einzelfall zu einem kurzzeitigen Verstopfen einer der Absaugöffnungen kommt, reicht die Absaugwirkung der übrigen offenen Absaugöffnung(en) aus, das Bohrklein zuverlässig zu entfernen.

In einer Variante des erfindungsgemässen Bohrwerkzeugs weist der Bohrkopf drei Schneiden auf, die zueinander in einem Winkelabstand zwischen etwa 90° und etwa 180°, vorzugsweise etwa 120°, angeordnet sind. Ein derartig ausgebildetes Bohrwerkzeug zeichnet sich durch einen sehr gleichmässigen Angriff des abzubauenden Untergrundmaterials und durch einen guten Bohrfortschritt aus. In einer vorteilhaften Weiterbildung eines Bohrwerkzeugs mit einem drei Schneiden aufweisenden Bohrkopf besitzt der Schaft wenigstens im vorderen Abschnitt eine polygonartige Umfangskontur.

Der Bohrkopf ist derart ausgebildet, dass in Draufsicht eine die Schneiden unterstützende, verbreiterte Kopfbasis Seitenflächen aufweist, die mit den Mantelflächen im wesentlichen zusammenfallen. Die Schneiden schliessen mit den Seitenflächen der Kopfbasis einen Winkel von etwa 90° ±10° ein. Die gewählte geometrische Auslegung des dreischneidigen Bohrkopfs und des polygonartigen Vorderabschnitts des Schafts stellt eine Optimierung hinsichtlich der für den stumpfen Fügeprozess bereitstehenden Fügeflächen dar.

Im folgenden wird die Erfindung unter Bezugnahme auf in den schematischen Zeichnungen dargestellte Ausführungsbeispiele näher erläutert. Es zeigen:
- Fig. 1: ein in eine Werkzeugaufnahme eines Hammerbohrgerätes eingesetztes erfindungsgemässes Bohrwerkzeug;
- Fig. 2: den vorderen Abschnitt des Bohrwerkzeugs aus Fig. 1 im Axialschnitt;
- Fig. 3: eine Variante des Bohrwerkzeugs in einem zu Fig. 2 analogen Axialschnitt;
- Fig. 4: eine Draufsicht auf den Bohrkopf eines dritten Ausführungsbeispiels des erfindungsgemässen Bohrwerkzeugs; und
- Fig. 5: eine Draufsicht auf ein weiteres Ausführungsbeispiel des erfindungsgemässen Bohrwerkzeugs mit einem gegenüber Fig. 4 modifizierten Bohrkopf.

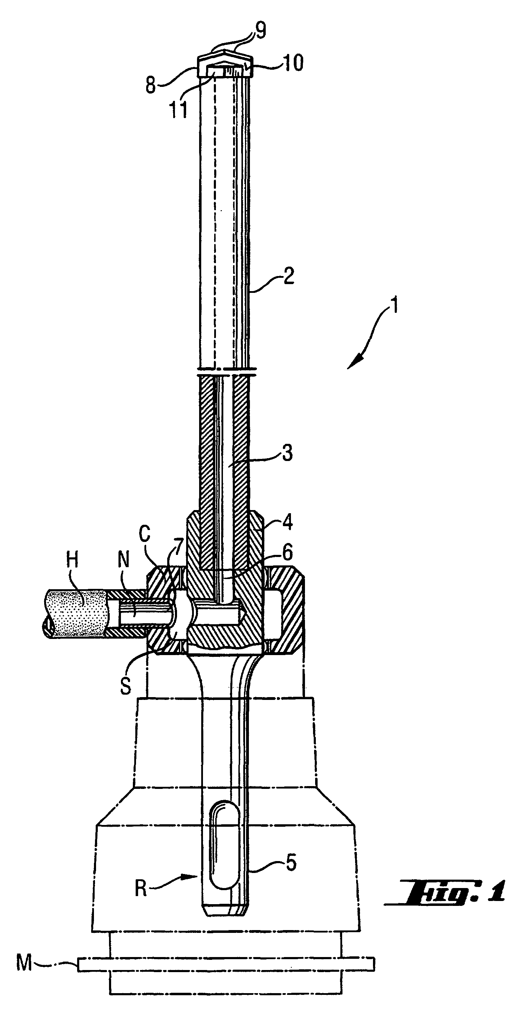

Fig. 1 zeigt ein gesamthaft mit dem Bezugszeichen 1 versehenes, erfindungsgemäss ausgebildetes Bohrwerkzeug, das in eine Werkzeugaufnahme R eines angedeuteten Bohrgeräts M, beispielsweise- eines Hammerbohrgeräts, eingesetzt dargestellt ist. Das Bohrwerkzeug 1 besitzt einen rohrförmigen Schaft 2 mit einem Durchgangskanal 3. Der rohrförmige Schaft 2 ist an seinem einen Ende mit einem Anschlussteil 4 verbunden, beispielsweise verschweisst oder verlötet, das ein Einsteckende 5 für den Anschluss an die Werkzeugaufnahme R des Bohrgeräts M aufweist. Der Durchgangskanal 3 steht mit einer Bohrung 6 im Anschlussteil 4 in Verbindung, die in einer Öffnung 7 am Umfang des Anschlussteils 4 mündet. In axialer Verlängerung der Werkzeugaufnahme R ist am Bohrgerät M ein drehfestes Kupplungsteil C vorgesehen, das mit einem Ringraum S ausgestattet ist, der mit der Mündungsöffnung 7 der Bohrung 6 im Anschlussteil 4 in Verbindung steht. Der Ringraum S mündet in einen Anschlussstutzen N, an den ein Absaugschlauch H angeschlossen ist.

Am dem Anschlussteil 4 gegenüberliegenden Ende des hülsenförmigen Schaftes 2 ist das Bohrwerkzeug 1 mit einem Bohrkopf 8 ausgestattet, der Schneiden 9 aufweist und zur Gänze aus einem Schneidwerkstoff, beispielsweise einem Hartmetall, besteht. Der Bohrkopf 8 ist mit dem freien Vorderende des rohrförmigen Schafts 2 stumpf gefügt und beispielsweise durch Schweissen oder Löten permanent verbunden. Im Bereich des Bohrkopfs 8 steht der Durchgangskanal mit zwei Absaugöffnungen 11 in Verbindung, die von der Mündung zweier Kopfkanäle gebildet werden und im Fügebereich des Bohrkopfs 8 mit dem Schaft 2 angeordnet sind. Fig. 1 zeigt bloss eine der Absaugöffnungen 11, die durch Aussparungen in den Seitenflächen 10 des Bohrkopfs 8 gebildet sind. Die zweite Absaugöffnung ist auf der dem Betrachter abgewandten Seite des Bohrwerkzeugs 1 angeordnet.

Fig. 2 zeigt einen Axialschnitt des vorderen Abschnitts des Schafts 2 des erfindungsgemässen Bohrwerkzeugs 1 in einer zur Fig. 1 um 90° gedrehten Lage. Die von den Mündungen der zwei Kopfkanäle 12 gebildeten Absaugöffnungen 11 sind auf den gegenüberliegenden Flachseiten des Bohrkopfs 8 angeordnet und gegenüber den Schneiden 9 des Bohrkopfs 8 axial zurückgesetzt. Die Kopfkanäle 12 verlaufen gegenüber der Achse A des Schafts 2 bzw. gegenüber dem axialen Durchgangskanal 3 geneigt. Dadurch ist gewährleistet, dass ihre Mündungsöffnungen zu den Seitenflächen 10 des Bohrkopfs 8 bzw. zum Mantel des Schafts 2 orientiert sind. Der Neigungswinkel ist mit a bezeichnet und beträgt zwischen etwa 10° und 70°. Wie aus der Darstellung ersichtlich ist, ist die Querschnittsfläche der Kopfkanäle 12 kleiner als die Querschnittsfläche des axialen Durchgangskanals 3. Vorzugsweise beträgt sie zwischen etwa 30% und 70% der Querschnittsfläche des Durchgangskanals 3. Ein Grossteil der Mündungsfläche der Kopfkanäle 12 ist im Bereich des Umfangs des Schafts 2 bzw. des Bohrkopfs 8 angeordnet.

Fig. 3 zeigt ein zweites Ausführungsbeispiel des erfindungsgemässen Bohrwerkzeugs, das gesamthaft mit dem Bezugszeichen 21 versehen ist. Gemäss der Darstellung weist der Schneiden 29 aufweisende Bohrkopf 28 an seiner den Schneiden abgewandten Seite eine zapfenartige, axiale Verlängerung 24 auf, die im Vorderabschnitt des Schafts 22 in den Durchgangskanal 23 eingebettet ist. Der Durchgangskanal 23 besitzt wenigstens im Vorderabschnitt des Schafts 22 einen von der Kreisform abweichenden Querschnitt, der beispielsweise, wie angedeutet ist, sechseckig ausgebildet ist. Die Aussenkontur der axialen Verlängerung 24 des Bohrkopfs 28 ist dem Querschnitt des Durchgangskanals 23 angeglichen. Dadurch ist der Bohrkopf 28 zusätzlich zu der Verbindung, beispielsweise durch Löten oder Schweissen, mit dem freien Vorderende des Schafts 22 drehfest in dem Durchgangskanal 23 gehalten.

Wie aus Fig. 3 ersichtlich ist, ist nur ein Kopfkanal 26 vorgesehen, dessen Mündung die Absaugöffnung 27 bildet. Der Kopfkanal 26 ist im Fügebereich des Bohrkopfs 28 und des Schafts 22 angeordnet und durch Materialaussparungen in der Seitenfläche 25 des Bohrkopfs 28 und am freien Vorderende des Schafts 22 gebildet. Die Absaugöffnung ist gegenüber den Schneiden 29 axial zurückgesetzt. Der Kopfkanal 26 verläuft gegenüber der axialen Durchgangskanal 23 derart geneigt, dass die Absaugöffnung in Richtung der Seitenfläche 25 des Bohrkopfs 28 orientiert ist.

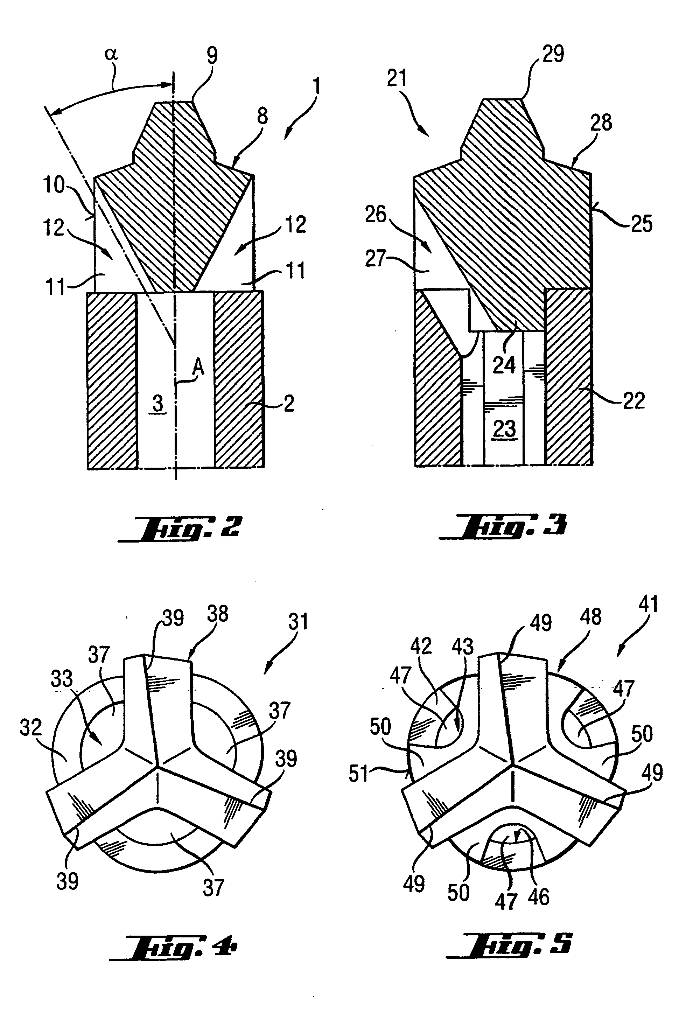

Fig. 4 zeigt eine Draufsicht auf das mit einem Bohrkopf bestückte freie Vorderende des rohrförmigen Schafts eines weiteren Ausführungsbeispiels des erfindungsgemässen Bohrwerkzeugs, das gesamthaft mit 31 bezeichnet ist. Der rohrförmige Schaft 32 weist eine von der Kreisform abweichende, annähernd polygonartige Umfangskontur auf. Der Querschnitt des Durchgangskanals 33 entspricht weitgehend der Umfangskontur des Schafts 32. Der stumpf mit dem freien Vorderende des Schafts 32 gefügte Bohrkopf 38 weist drei Schneiden 39 auf, die in einem Winkelabstand von etwa 120° voneinander angeordnet sind. Der Verlauf der Schneiden 39 ist derart, dass sie zum Mantel des Schafts 32 unter einem Winkel von etwa 90° ±10° geneigt verlaufen. Die Anzahl der Absaugöffnungen 37 entspricht der Anzahl Schneiden 39. Dabei sind die Absaugöffnungen 37 derart angeordnet, dass bei drehendem Bohrwerkzeug 31 der Winkelabstand zwischen einer vorauseilenden Schneide 39 und der unmittelbar nacheilenden Absaugöffnung kleiner ist als 90°.

Fig. 5 zeigt eine Variante eines mit einem drei Schneiden 49 aufweisenden Bohrkopf 48 ausgestatteten Bohrwerkzeugs 41. Der rohrförmige Schaft 42 des Bohrwerkzeugs weist eine von der Kreisform abweichende Umfangskontur und einen Durchgangskanal 43 auf, dessen Querschnitt im wesentlichen polygonartig ist. Die drei Schneiden 49 sind zueinander in einem Winkelabstand von etwa 120° angeordnet. Jeder der drei Schneiden 49 ist eine Absaugöffnung 47 zugeordnet. Zur Vergrösserung der Fügefläche für die Verbindung des Bohrkopfs 48 und des Schafts 42, beispielsweise durch Schweissen oder Löten, weist der Bohrkopf 48 an seiner den Schneiden 49 abgewandten Seite eine verbreiterte Kopfbasis 50 auf. In der Kopfbasis 50 sind Aussparungen für die Kopfkanäle 46 vorgesehen. Die Kopfbasis 50 weist Seitenflächen 51 auf, deren Projektion mit der Umfangskontur des Schafts 42 weitgehend zusammenfällt. Auf diese Weise ist die Grösse der Fügefläche für die permanente Verbindung des Bohrkopfs 48 mit dem freien Vorderende des rohrförmigen Schafts 42 optimiert.

Das erfindungsgemässe Bohrwerkzeug ist in seiner Anwendung als Saugbohrer beschrieben worde. Es versteht sich, dass das geschilderte Bohrwerkzeug auch im umgekehrten Betrieb einsetzbar ist. Beispielsweise kann der Durchgangskanal mit seinen Mündungen auch für die Spülung eines Bohrlochs mit Luft oder einer Spülflüssigkeit verwendet werden.

## Patentansprüche

1. Bohrwerkzeug zur Erstellung von Bohrlöchem in Gestein, Beton, Mauerwerk und dergleichen, mit einem rohrförmigen Schaft (2; 22; 32; 42), der einen in Absaugöffnungen (7, 11; 27; 37; 47) mündenden, axial verlaufenden Durchgangskanal (3; 23; 33; 43) besitzt, an seinem einen Längsende mit einem Einsteckende (5) für den Anschluss an ein Bohrgerät (M) ausgestattet ist und am gegenüberliegenden freien Vorderende einen Schneiden (9; 29; 39; 49) aufweisenden Bohrkopf (8; 28; 38; 48) trägt, der zur Gänze aus Schneidwerkstoff, vorzugsweise aus einem Hartmetall, besteht, wobei wenigstens eine Absaugöffnung (11; 27; 37; 47) von der Mündung eines Kopfkanals (12; 26; 36; 46) gebildet ist, der zumindest teilweise vom Material des Bohrkopfs (8; 28; 38; 48) berandet ist und dessen Mündungsfläche wenigstens zu einem Teil im Umfangsbereich des Schafts (2; 22; 32; 42) und/oder des Bohrkopfs (8; 28; 38; 48) angeordnet ist, **dadurch gekennzeichnet, dass** der Bohrkopf (8; 28; 38; 48) mit dem freien Vorderende des rohrförmigen Schafts (2; 22; 32; 42) im wesentlichen stumpf gefügt und vorzugsweise durch Schweissen oder Löten verbunden ist.

2. Bohrwerkzeug nach Anspruch 1, **dadurch gekennzeichnet, dass** mehr als zwei Drittel der Mündungsfläche des Kopfkanals (12; 26; 36; 46) im Umfangsbereich des Schafts (2; 22; 32; 42) und/oder des Bohrkopfs (8; 28; 38; 48) angeordnet sind.

3. Bohrwerkzeug nach Anspruch 1 oder 2, **dadurch gekennzeichnet, dass** der Kopfkanal (12; 26) in Richtung des Mantels des Schafts (2; 22) bzw. zur axialen Seitenfläche (10; 25) des Bohrkopfs (8; 28) orientiert ist und mit der Längsachse (A) des rohrförmigen Schafts (2; 22) einen Winkel (α) einschliesst, der kleiner ist als 90° und vorzugsweise zwischen 10° und 70° beträgt.

4. Bohrwerkzeug nach einem der vorangehenden Ansprüche, **dadurch gekennzeichnet, dass** die Querschnittsfläche der Mündung des Kopfkanals (12; 26; 36; 46) kleiner ist als die Querschnittsfläche des Durchgangskanals (3; 23; 33; 43) und vorzugsweise zwischen 30% und 70% der Querschnittsfläche des Durchgangskanals beträgt.

5. Bohrwerkzeug nach einem der vorangehenden Ansprüche, **dadurch gekennzeichnet, dass** der Kopfkanal und/oder der Durchgangskanal einen von der Kreisform abweichenden Querschnitt aufweisen.

6. Bohrwerkzeug nach einem der vorangehenden Ansprüche, **dadurch gekennzeichnet, dass** der Schaft (22; 32; 42) eine von der Kreisform abweichende Umfangskontur aufweist.

7. Bohrwerkzeug nach einem der vorangehenden Ansprüche, **dadurch gekennzeichnet, dass** der Durchgangskanal (23) wenigstens im Vorderabschnitt des Schafts (22) einen polygonalen Querschnitt aufweist und der Bohrkopf (28) an seiner den Schneiden (29) gegenüberliegenden Seite eine axiale Verlängerung (24) besitzt, deren Umfangskontur dem Querschnitt des Durchgangskanals (23) wenigstens bereichsweise entspricht, wobei bei montiertem Bohrkopf (28) die axiale Verlängerung (24) drehfest im Durchgangskanal (23) gehalten ist.

8. Bohrwerkzeug nach einem der vorangehenden Ansprüche, **dadurch gekennzeichnet, dass** die Anzahl der Absaugöffnungen (37; 47) der Anzahl Schneiden (39; 49) am Bohrkopf (38; 48) entspricht und zu der in Drehrichtung nacheilenden Schneide jeweils einen Winkelabstand aufweisen, der kleiner ist als 90°.

9. Bohrwerkzeug nach einem der vorangehenden Ansprüche, **dadurch gekennzeichnet, dass** der Bohrkopf (38; 48) drei Schneiden (39; 49) aufweist, die zueinander in einem Winkelabstand zwischen etwa 90° und etwa 180°, vorzugsweise etwa 120°, angeordnet sind.

10. Bohrwerkzeug nach Anspruch 9, **dadurch gekennzeichnet, dass** der Schaft (42) wenigstens im vorderen Abschnitt eine polygonartige Aussenkontur aufweist und der Bohrkopf (48) derart ausgebildet ist, dass in Draufsicht eine die Schneiden (49) unterstützende, verbreiterte Kopfbasis (50) Seitenflächen (51) aufweist, die mit den Mantelflächen des Schafts (42) im wesentlichen zusammenfallen, wobei die Schneiden (49) mit den Seitenflächen (51) der Kopfbasis (50) einen Winkel von etwa 90° ± 10° einschliessen.

## Claims

1. Drilling tool for producing drilled holes in rock, concrete, masonry and the like, with a tubular shaft (2; 22; 32; 42), which exhibits a through duct (3; 23; 33; 43) running axially and opening into intake ports (7, 11; 27; 37; 47), is provided at its longitudinal end with an insert end (5) for connection to a drill (M), and supports at the opposing free front end a drill head (8; 28; 38; 48) exhibiting bits (9; 29; 39; 49), which drill head consists wholly of cutting material, preferably carbide, wherein at least one intake port (11; 27; 37; 47) is formed from the opening of a head duct (12; 26; 36; 46), which is at least partially bounded by the material of the drill head (8; 28; 38; 48) and whose opening surface is arranged at least partially in the circumferential area of the shaft (2; 22; 32; 42) and/or of the drill head (8; 28; 38; 48), **characterised in that** the drill head (8; 28 38; 48) is essentially butt joined to the free front end of the tubular shaft (2; 22; 32; 42), preferably by welding or soldering.

2. Drilling tool according to Claim 1, **characterised in that** more than two thirds of the opening surface of the head duct (12; 26; 36; 46) are arranged in the circumferential area of the shaft (2; 22; 32; 42) and/or of the drill head (8; 28; 38; 48).

3. Drilling tool according to Claim 1 or 2, **characterised in that** the head duct (12; 26) is orientated in the direction of the jacket of the shaft (2; 22) or toward the axial lateral surface (10; 25) of the drill head (8; 28), and forms with the longitudinal axis (A) of the tubular shaft (2; 22) an angle (α) which is smaller than 90° and preferably between 10° and 70°.

4. Drilling tool according to one of the preceding claims, **characterised in that** the cross-sectional area of the opening of the duct head (12; 26; 36; 46) is smaller than the cross-sectional area of the through duct (3; 23; 33; 43), and is preferably between 30% and 70% of the cross-sectional area of the through duct.

5. Drilling tool according to one of the preceding claims, **characterised in that** the head duct and/or the through duct exhibit a cross-section that is not circular.

6. Drilling tool according to one of the preceding claims, **characterised in that** the shaft (22; 32; 42) exhibits a peripheral contour that is not circular.

7. Drilling tool according to one of the preceding claims, **characterised in that** the through duct (23) exhibits a polygonal cross-section, at least in the front section of the shaft (22), and **in that** the drill head (28) exhibits on its side opposing the bits (29) an axial extension (24) whose peripheral contour corresponds at least partially to the cross-section of the through duct (23), wherein the axial extension (24) is retained in the through duct (23) so that it does not rotate when the drill head (28) is fitted.

8. Drilling tool according to one of the preceding claims, **characterised in that** the number of intake ports (37; 47) corresponds to the number of bits (39; 49) on the drill head (38; 48), and **in that** the openings form with the bit trailing in the direction of rotation an angle that is smaller than 90°.

9. Drilling tool according to one of the preceding claims, **characterised in that** the drill head (38; 48) exhibits two bits (39; 49) which are arranged to form a mutual angle of between approx. 90° and 180°, preferably approx. 120°.

10. Drilling tool according to Claim 9, **characterised in that** the shaft (42) exhibits a polygonal outer contour, at least in the front section, and **in that** the drill head (48) is designed so that in elevation a widened head base (50) supporting the bits (49) exhibits lateral surfaces (51) which essentially coincide with the jacket surfaces of the shaft (42), wherein the bits (49) form an angle of approx. 90° ± 10° with the lateral surfaces (51) of the head base (50).

## Revendications

1. Garniture de forage pour la réalisation de trous forés dans de la roche, du béton, de la maçonnerie et analogues, avec une tige tubulaire (2 ; 22 ; 32 ; 42) qui possède un canal débouchant s'étendant axialement (3 ; 23 ; 33 ; 43) débouchant dans des orifices d'aspiration (7, 11 ; 27 ; 37 ; 47) et qui, à une extrémité longitudinale, est munie d'une extrémité insérable (5) pour le raccordement à un outil de forage (M) et, à l'extrémité avant libre opposée, porte une tête de forage (8 ; 28 ; 38 ; 48), laquelle comporte des taillants (9 ; 29 ; 39 ; 49) et est constituée en totalité de matériau de coupe, de préférence en métal dur, au moins un orifice d'aspiration (11 ; 27 ; 37 ; 47) étant formé par l'orifice débouchant d'un canal de tête (12 ; 26 ; 36 ; 46) qui est bordé au moins partiellement par la matière de la tête de forage (8 ; 28 ; 38 ; 48) et dont la surface débouchante se trouve, au moins pour une partie, dans la zone circonférentielle de la tige (2 ; 22 ; 32 ; 42) et/ou de la tête de forage (8 ; 28 ; 38 ; 48), **caractérisée en ce que** la tête de forage (8 ; 28 ; 38 ; 48) est reliée à l'extrémité avant libre de la tige tubulaire (2 ; 22 ; 32 ; 42) par un joint sensiblement bout à bout et, de préférence, par soudage ou brasage.

2. Garniture de forage selon la revendication 1, **caractérisée en ce que** plus de deux tiers de la surface débouchante du canal de tête (12 ; 26 ; 36 ; 46) se trouvent dans la zone circonférentielle de la tige (2 ; 22 ; 32 ; 42) et/ou de la tête de forage (8 ; 28 ; 38 ; 48).

3. Garniture de forage selon la revendication 1 ou 2, **caractérisée en ce que** le canal de tête (12 ; 26) est orienté en direction de la surface périphérique de la tige (2 ; 22), respectivement vers la surface latérale axiale (10 ; 25) de la tête de forage (8 ; 28) et forme, avec l'axe longitudinal (A) de la tige tubulaire (2 ; 22), un angle (α) qui est inférieur à 90° et qui est compris de préférence entre 10° et 70°.

4. Garniture de forage selon une des revendications précédentes, **caractérisée en ce que** la section transversale de l'orifice débouchant du canal de tête (12 ; 26 ; 36 ; 46) est inférieure à la section transversale du canal débouchant (3 ; 23 ; 33 ; 43) et est comprise de préférence entre 30 % et 70 % de la section transversale du canal débouchant.

5. Garniture de forage selon une des revendications précédentes, **caractérisée en ce que** le canal de tête et/ou le canal débouchant présentent une section transversale autre que circulaire.

6. Garniture de forage selon une des revendications précédentes, **caractérisée en ce que** la tige (22 ; 32 ; 42) présente un contour circonférentiel autre que circulaire.

7. Garniture de forage selon une des revendications précédentes, **caractérisée en ce que** le canal débouchant (23) présente, au moins dans la portion avant de la tige (22), une section polygonale et la tête de forage (28) possède, sur son côté situé à l'opposé des taillants (29), un prolongement axial (24) dont le contour circonférentiel correspond au moins par endroits à la section transversale du canal débouchant (23), le prolongement axial (24) étant maintenu sans possibilité de rotation dans le canal débouchant (23) quand la tête de forage (28) est montée.

8. Garniture de forage selon une des revendications précédentes, **caractérisée en ce que** le nombre d'orifices d'aspiration (37 ; 47) correspond au nombre de taillants (39 ; 49) sur la tête de forage (38 ; 48) et chaque orifice d'aspiration présente, par rapport au taillant consécutif dans la direction de rotation, un écart angulaire qui est inférieur à 90°.

9. Garniture de forage selon une des revendications précédentes, **caractérisée en ce que** la tête de forage (38 ; 48) comporte trois taillants (39 ; 49) qui sont disposés les uns par rapport aux autres avec un écart angulaire compris entre environ 90° et environ 180°, de préférence égal à environ 120°.

10. Garniture de forage selon la revendication 9, **caractérisée en ce que** la tige (42) présente, au moins dans la portion avant, un contour extérieur polygonal et la tête de forage (48) est conformée de façon qu'en vue de dessus une base de tête élargie (50) soutenant les taillants (49) comporte des surfaces latérales (51) qui coïncident sensiblement avec les surfaces périphériques de la tige (42), les taillants (49) formant avec les surfaces latérales (51) de la base de tête (50), un angle d'environ 90° ± 10°.
